# EUROPÄISCHE PATENTSCHRIFT

(11) **EP 2 349 675 B1**
(45) Veröffentlichungstag und Bekanntmachung des Hinweises auf die Patenterteilung: **30.03.2022**
(21) Anmeldenummer: 09748028.9
(22) Anmeldetag: 16.10.2009
(51) Int. Cl.: B29C 48/90, B29C 45/56, B29C 48/30, B29C 48/35

(54) **VERFAHREN UND VORRICHTUNG ZUR HERSTELLUNG VON ENDLOSSTRÄNGEN**
METHOD AND DEVICE FOR PRODUCING ENDLESS STRANDS
PROCÉDÉ ET DISPOSITIF DE FABRICATION DE BARRES CONTINUES

(30) Priorität: 05.11.2008 DE 102008056052
(43) Veröffentlichungstag der Anmeldung: 03.08.2011
(73) Patentinhaber: CQLT SaarGummi Technologies S.à.r.l., 5544 Remich (LU)
(72) Erfinder: BERKEMEIER, Frank, 47929 Grefrath (DE); LEIFFELS, Jörg, 42109 Wuppertal (DE)
(74) Vertreter: Wolff, Matthias
(86) Internationale Anmeldenummer: PCT/EP2009/007423
(87) Internationale Veröffentlichungsnummer: WO 2010/051908

(56) Entgegenhaltungen:
- AT-B1- 504 904
- DE-C- 893 120
- US-A1- 2003 160 356

## Beschreibung

Die Erfindung betrifft ein Verfahren zur Herstellung von Endlossträngen, insbesondere in Längsrichtung strukturierter Stränge aus Kunststoff, mit den Merkmalen des Anspruchs 1 sowie eine Vorrichtung für die Durchführung des Verfahrens mit den Merkmalen des Anspruchs 10.

Zur Herstellung endloser Kunststoffstränge, insbesondere solcher, deren Querschnitt sich in Längsrichtung ändert und deren Herstellung durch Extrusion daher kaum möglich ist, wird das sog. Korrugatorverfahren oder ein diesem ähnliches Verfahren eingesetzt. In einer den Strang erzeugenden Gießform wandern dabei in Stranglängsrichtung aneinander gereihte Gießformteile entsprechend der Erzeugungsgeschwindigkeit des Strangs vom hinteren zum vorderen Gießformende und werden von dort zur fortlaufenden Neubildung der Gießform an das vordere Ende zurückgeführt. Das innerhalb des Formhohlraums erstarrte Gussmaterial verschließt das vordere Ende des Formhohlraums. Die bewegten Gießformteile transportieren in den Formhohlraum an dessen offenem Ende und in dessen Längsrichtung eingefülltes Gussmaterial fortlaufend in Richtung zum vorderen Ende der Gießform.

Die DE 893 120 C beschreibt ein Verfahren und eine Vorrichtung zur Herstellung von Endlossträngen, wobei eine an ihren Enden offene Gießform durch einen feststehenden Gießformabschnitt, in dem ein Heißkanal einer Spritzgusseinrichtung ausmündet, und einen bewegbaren, als Kranz auf einer Drehscheibe ausgebildeten Gießformabschnitt gebildet ist. Das Gussmaterial erstarrt innerhalb der von den beiden Abschnitten gebildeten, beidseitig offenen Kavität. Der durch den kranzförmigen Gießformabschnitt wegtransportierte Endlosstrang wird dann im Winkelabstand von der Gießform von der Drehscheibe abgeführt. Der Strangquerschnitt darf keine Hinterschneidungen aufweisen, die diese Abführung verhindern würden.

Aus der AT 504 904 B1 gehen ein Verfahren und eine Vorrichtung zur Herstellung von Kunststoffleisten, also von Strängen von begrenzter Länge, hervor, wobei eine längliche Formkavität eine sich über ihre gesamte Länge erstreckende Einlassöffnung aufweist. In die längliche Einlassöffnung greift ein die Öffnung partiell verschließendes Formungselement ein, in dessen der Formkavität zugewandten, die Formkavität ergänzenden Endfläche ein Heißkanal für die Zuführung von Gussmaterial ausmündet. Bei der Herstellung der Leisten werden das Formungselement und die Formkavität relativ zueinander bewegt, wobei das Gussmaterial innerhalb des durch das Formungselement verschlossenen Bereiches der Formkavität fortlaufend erstarrt.

Die US 2003/0160356 A1, die die Oberbegriffe der Ansprüche 1 und 10 offenbart, beschreibt ein Verfahren zur Herstellung von Endlossträngen durch Umformen. Ein extrudierter Schlauch wird unmittelbar nach der Extrusion in einen durch ständiges Zusammen- und Auseinanderführen von Formgliedern gebildeten, in seiner Gesamtheit mit der Geschwindigkeit des Schlauches bewegtes Umformwerkzeug in Richtung von dessen Längsachse eingeführt.

Der Erfindung liegt die Aufgabe zugrunde, ein neues Verfahren und eine neue Vorrichtung zur Herstellung von Endlossträngen zu schaffen, welches bzw. welche die Herstellung hinterschnittener Strangquerschnittsgeometrien mit geringerem baulichem Aufwand als die bekannten Verfahren und Vorrichtungen zur Herstellung solcher Endlosstränge ermöglicht.

Diese Aufgabe wird durch die in den unabhängigen Ansprüchen 1 und 10 angegebenen Merkmale gelöst.

Vorzugsweise ist vorgesehen, dass ein Drehelement mit einer ringförmigen Formkavität um die Ringachse gedreht wird, dass an einer entgegen der Drehung fortlaufenden Angussstelle Gussmaterial in die Formkavität eingebracht wird, und dass die Formkavität im Winkelabstand zu der Angussstelle entgegen der Drehung fortlaufend partiell geöffnet wird, um einen in der Formkavität verfestigten Endlosstrang zu entformen.

Entsprechend weist eine bevorzugte Ausführungsform der Vorrichtung zur Durchführung dieses Verfahrens ein Drehelement mit einer ringförmigen, um die Ringachse drehbaren Formkavität, eine Einrichtung zur Einbringung von Gussmaterial in die Formkavität an einer entgegen der Drehung fortlaufenden Angussstelle sowie Einrichtungen zur partiellen Öffnung der Formkavität im Winkelabstand zu der Angussstelle auf.

Das Gussmaterial, z.B. ein Thermoplast, wird vorzugsweise unter Druck z.B. mit Hilfe einer Spritzgießeinrichtung, in die sich drehende Formkavität an einer, vorzugsweise ortsfesten, Angussstelle eingebracht und durch die Bewegung bzw. Drehung der Formkavität von der Angussstelle in Richtung zu einem Erstarrungsbereich abtransportiert. Der Erstarrungsbereich verbleibt im Wesentlichen an Ort und Stelle. Entgegen der Bewegungs- bzw. Drehrichtung gelangt Gussmaterial ggf. nur über eine gewisse Vorlaufstrecke in die Formkavität, wobei sich zum Spritzdruck des Gussmaterials ein als Nachdruck wirkender Gegendruck aufbaut. Bis zur Entformungsöffnung kühlt sich das erstarrte Gussmaterial dann weiter ab. Als Kunststoff kommen neben Thermoplasten z.B. auch Duroplaste und Elastomere, insbesondere thermoplastische Elastomere, in Betracht.

Die Formkavität kann über ihre gesamte Länge bzw. ihren Ringumfang verteilte, verschließbare Öffnungen aufweisen, die jeweils bei Erreichen der Angussstelle freigegeben werden. Die Bewegung der Formkavität bzw. Drehung des Drehelements kann schrittweise von Öffnung zu Öffnung oder kontinuierlich mit z.B. konstanter Geschwindigkeit erfolgen.

In einer besonders bevorzugten Ausführungsform der Erfindung erfolgt die Einbringung des Gussmaterials in die Formkavität kontinuierlich durch eine über die gesamte Länge der Formkavität durchgehende Einlassöffnung für das Gussmaterial hindurch, die in einem begrenzten, sich in Bewegungs- bzw. Drehrichtung und ggf. auch entgegen der Bewegungs- bzw. Drehrichtung von der Angussstelle erstreckenden Längen- bzw. Winkelbereich fortlaufend verschlossen wird, wenn innerhalb dieses Längen- bzw. Winkelbereichs, das Gussmaterial wenigstens im Wandbereich der Formkavität erstarrt, kann außerhalb dieses Bereichs durch die unverschlossene Ringöffnung kein Gussmaterial mehr austreten. Der sich in Bewegungs- bzw. Drehrichtung erstreckende Längen- bzw. Winkelbereich bildet eine Kalibrierstrecke. Der sich entgegen der Bewegungs- bzw. Drehrichtung von der Angussstelle erstreckende Längen- bzw. Winkelbereich bildet die oben genannte Vorlaufstrecke, in die hinein auch Gussmaterial gelangt.

Der Formkavität kann in einem die Angussstelle einschließenden Längen- bzw. Winkelbereich, also z.B. innerhalb der Kalibrierstrecke und der Vorlaufstrecke, Wärme entzogen oder/und zugeführt werden. Vorzugsweise wird innerhalb der Vorlaufstrecke Wärme zugeführt, die dafür sorgt, dass das Gussmaterial in diesem Bereich flüssig bleibt. Im Bereich der Kalibrierstrecke wird hingegen Wärme abgezogen und so gesichert, dass innerhalb der Kalibrierstrecke das Gussmaterial erstarrt. Letztere Verfahrensweise ist insbesondere bei Verarbeitung von thermoplastischen Elastomeren vorteilhaft.

Der Wärmeentzug oder/und die Wärmezuführung kann über ein die Einlassöffnung fortlaufend verschließendes Formungselement erfolgen, deren der Formkavität zugewandte Endfläche die Formkavität begrenzt und ergänzt. Zwischen der Endfläche und dem erstarrten Gussmaterial kommt es zu Relativbewegungen, die jedoch, da die Breite der ringförmigen Einlassöffnung klein im Vergleich zum Umfang der Formkavität ist, zu keinem die Drehung des Drehelements behindernden Reibungsmoment führt.

Vorzugsweise sind die Bewegung der Formkavität, insbesondere die Drehung des Drehelements, die Zufuhr von Gussmaterial, die Gussmaterialtemperatur und die Wärmeab- und -zuführung so aufeinander abgestimmt, dass der Erstarrungsbereich, bezogen auf die Gesamtvorrichtung, stets an Ort und Stelle verbleibt. Ebenso sind die Geschwindigkeit, insbesondere Drehgeschwindigkeit, und die Bildung der Entformungsöffnung aufeinander abgestimmt, so dass die Entformungsöffnung stets im gleichen Abstand zur Angussstelle liegt. Alternativ wären auch veränderliche Positionen des Erstarrungsbereichs und/oder der Entformungsöffnung möglich.

Zur Bildung der Formkavität können die Formkavität begrenzende Formglieder tangential aneinander gereiht werden, wobei die Formglieder zur Bildung der Entformungsöffnung dann fortlaufend seitlich, z.B. in axialer oder/und radialer Richtung des Drehelements aus ihrer Ausgangsstellung heraus und wieder zurückbewegt werden.

Entsprechende Bewegungseinrichtungen können mit dem Drehelement mitgedreht werden, wobei für den Bewegungsantrieb z.B. Steuerkurven, elektromechanische, pneumatische oder hydraulische Antriebe in Betracht kommen. Über das Drehelement, z.B. dessen Drehachse, lassen sich ferner Medien, wie z.B. Öl und Luft zur Temperierung, sowie elektrischer Strom und elektrische Steuersignale zu führen.

Die Zuführung des Gussmaterials lässt sich in Abhängigkeit vom Querschnitt des Strangs, der sich in Stranglängsrichtung ändern kann, steuern.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine schematische Darstellung einer Vorrichtung nach der Erfindung in geschnittener Seitenansicht,
- Fig. 2: eine Ausgestaltungsform der Vorrichtung von Fig. 1 in einer geschnittenen, zu der Seitenansicht von Fig. 1 um 90° gedrehten Seitenansicht,
- Fig. 3: eine Detaildarstellung der Vorrichtung von Fig. 2 in einer zu der Ansicht von Fig. 2 um 90° gedrehten Seitenansicht, und

Fig. 4 und 5 Ausführungsbeispiele für (nicht erfindungsgemäße) Vorrichtungen. Eine in Fig. 1 schematisch dargestellte Vorrichtung nach der Erfindung weist ein Drehelement 1 auf, das durch eine (nicht gezeigte) Antriebseinrichtung um eine Achse 2 in der durch einen Pfeil 3 angezeigten Richtung drehbar ist.

In dem Drehkörper 1 ist eine ringförmige, zu der Achse 2 konzentrische Formkavität 4 gebildet, die eine durchgehend über den Außenumfang der Formkavität 4 umlaufende schmale Einlassöffnung 5 aufweist.

In die Einlassöffnung 5 greift erfindungsgemäß ein Steg eines Formungselements 6 ein, in dessen der Formkavität 4 zugewandten Endfläche 7 ein Heißkanal 8 für die Zuführung von Gussmaterial, in dem betreffenden Ausführungsbeispiel von geschmolzenem Kunststoff, ausmündet. Das Formungselement 6 verschließt die umlaufende Einlassöffnung 5 über einen bestimmten Umfangsbereich und ergänzt mit der genannten Endfläche 7 in diesem Bereich die Formkavität 4, so dass sie im Querschnitt rundum geschlossen ist.

Durch die Drehung des Drehkörpers 1 mit der Formkavität 4 wird durch den Heißkanal 8 zugeführtes Gussmaterial, in dem gezeigten Ausführungsbeispiel ein Thermoplast, gemäß Pfeil 3 von der Angussstelle laufend abtransportiert. Nahe der Mündungs- bzw. Angussstelle des Heißkanals 8 bildet sich ein Erstarrungsbereich, der entgegen der Drehrichtung der Formkavität 4 fortläuft und so an Ort und Stelle verbleibt.

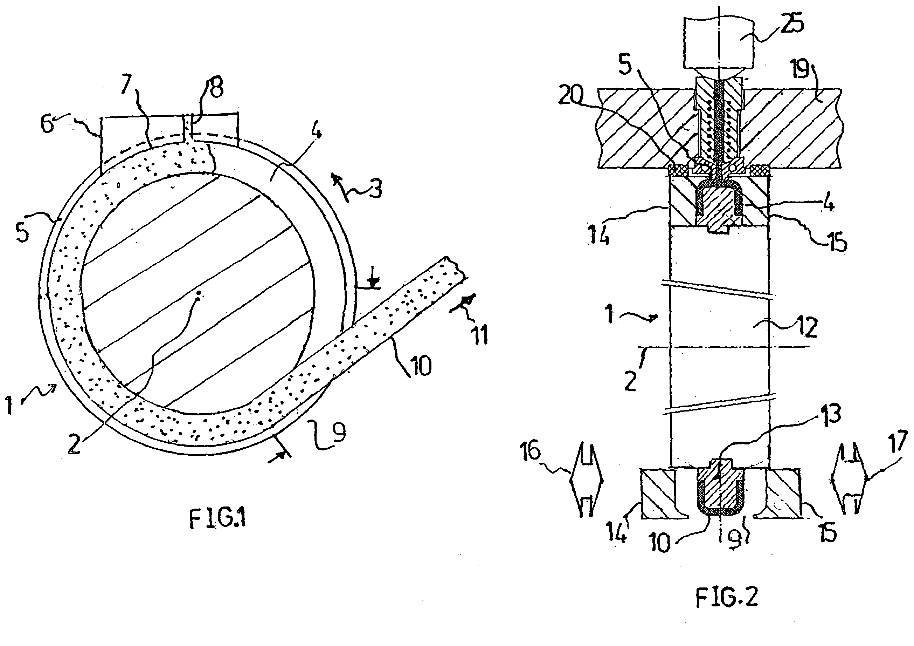

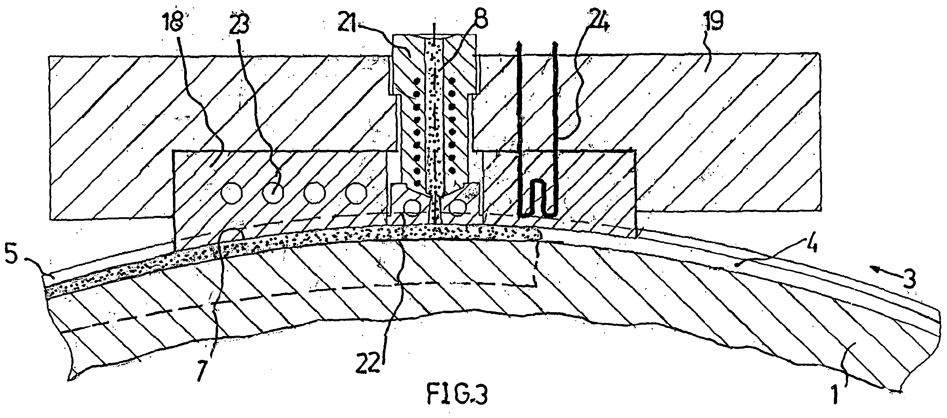

Bei 10 lässt sich, wie weiter unten anhand der Fig. 2 und 3 genauer erläutert wird, die Formkavität 4 partiell über einen bestimmten Winkelbereich 9 öffnen und ein in der Formkavität 4 verfestigter Endlosstrang 10 aus der Formkavität 4 herausführen und z.B. auf eine (nicht gezeigte) Rolle aufwickeln.

Erfindungsgemäß weist das um die Drehachse 2 drehbare Element 1 eine zentrale Scheibe 12 mit einem peripheren Profilring 13 auf, siehe Fig. 2. Der periphere Profilring 13 bildet in dem gezeigten Ausführungsbeispiel zusammen mit beweglichen Formgliedern 14 und 15 eine Formkavität 4, die der Bildung eines Endlosstrangs 10 mit U-förmigem Querschnitt dient. Während der Profilring 13 geschlossen um die periphere Randfläche der zentralen Scheibe 12 umläuft, sind zur Bildung der ringförmigen Formkavität 4 mehrere Formglieder 14 bzw. 15 segmentweise aneinander gereiht, z.B. auf jeder Seite vier solcher, sich über einen Winkel von 90° erstreckender Formglieder. Über den Umfang des Drehelements verteilt könnten deutlich mehr als vier Formglieder vorgesehen sein.

Die dem Strang zugewandten Formgliederflächen können Vorsprünge oder/und Vertiefungen aufweisen, z.B. um in den U-Schenkeln des Strangs Einschnitte oder/und Durchbrüche zu bilden.

Einrichtungen zum Bewegen der Formglieder, z.B. Steuerkurven oder elektromechanische Bewegungseinrichtungen, können mit dem Drehelement 1 mitgedreht werden.

Aus den Fig. 2 und 3 geht ferner eine Möglichkeit zur Ausgestaltung des in Fig. 1 schematisch dargestellten Formelements 6 hervor. Ein die Endfläche 7 bildendes Einsatzstück 18 ist in eine Rahmenhalterung 19 der Vorrichtung eingesetzt. Wie Fig. 2 erkennen lässt, ist das Drehelement 1 an der Rahmenhalterung 19 bei 20 zusätzlich gelagert. Einen Heißkanal 8 bilden ein Heißkanaldüsenelement 21 sowie ein sich daran als Endstück anschließender, temperierbarer Angusseinsatz 22, wobei der Angusseinsatz 22 in eine Bohrung in dem Einsatzstück 18 eingesetzt ist. Über eine Spritzgießeinrichtung 25 lässt sich unter Druck Gussmaterial zuführen.

Ein sich in Drehrichtung gemäß Pfeil 3 von dem Heißkanal 8 an erstreckender Teil des Einsatzstücks 18 bildet eine Kalibrierstrecke, in welcher Wärme von der Formkavität 4 bzw. darin enthaltenem Gussmaterial abführbar ist. Der Wärmeabführung dienen Kühlkanäle 23. Die Kalibrierstrecke erstreckt sich z.B. über einen Winkel von 30°.

Ein sich entgegen der Drehrichtung von dem Heißkanal 8 an erstreckender Teil des Einsatzstücks 18 bildet eine Vorlaufstrecke und ist durch ein schematisch dargestelltes Heizelement 24 beheizbar. Zusätzlich könnte das Einsatzstück 18 im Bereich der Vorlaufstrecke den Kühlkanälen 23 entsprechende Kühlkanäle aufweisen und wahlweise auch kühlbar sein. Die Vorlaufstrecke erstreckt sich z.B. über einen Winkel von 10°.

Im Betrieb der vorangehend beschriebenen Vorrichtung wird das Drehelement 1, z.B. mit konstanter Drehgeschwindigkeit, bewegt, wobei seine periphere Randfläche mit der ringförmigen Öffnung 5 der Formkavität 4 in Richtung des Pfeils 3 an der Ausmündung des Heißkanals 8 vorbeiläuft und wobei im Bereich der Kalibrierstrecke und der Vorlaufstrecke die Endfläche 7 des Einsatzstücks 18 die Formkavität 4 fortlaufend partiell verschließt.

Unter Druck durch den Heißkanal 8 hindurch zugeführtes Gussmaterial gelangt in die Formkavität 4, deren Drehbewegung dafür sorgt, dass es ständig in Richtung des Pfeils 3 abtransportiert wird und in die Vorlaufstrecke nur über einen Teil ihrer Länge hineinfließt. Durch die Drehbewegung baut sich in der Vorlaufstrecke zum Druck des Gussmaterials ein als Nachdruck wirkender Gegendruck auf.

Bei Verwendung diskontinuierlich arbeitender Spritzgusseinheiten können zur Erzeugung eines ununterbrochenen Materialzufuhrstroms mehrere solcher Einheiten abwechselnd mit dem Heizkanal 8 verbunden werden. Alternativ lässt sich ein Gussmaterialstrom kontinuierlich durch ein extrusionsähnliches Verfahren zuführen.

Eine Beheizung der Vorlaufstrecke verhindert die Erstarrung von Gussmaterial in diesem Bereich. Umgekehrt sichert eine Wärmeabfuhr auf der Kalibrierstrecke, dass die Verfestigung des Gussmaterials innerhalb dieses Bereichs abgeschlossen ist und aus der nach dem Ende der Kalibrierstrecke wieder freiliegenden Öffnung 5 der Formkavität 4 kein Gussmaterial austreten kann.

Sämtliche Einflussparameter, d.h. die Drehgeschwindigkeit des Drehelements 1, die Gussmaterialzufuhr durch den Heißkanal 8, die Temperatur des Gussmaterials, die Wärmezufuhr im Bereich der Vorlaufstrecke und die Wärmeabfuhr im Bereich der Kalibrierstrecke, sind so bemessen, dass sich innerhalb der Kalibrierstrecke und ggf. der Vorlaufstrecke quasi ein statischer Zustand mit einem etwa ortsfesten Erstarrungsbereich ausbildet, der seine Lage bezüglich der Angussstelle, d.h. der Ausmündung des Heißkanals 8, nicht oder nur wenig verändert.

Die sich ergebende Relativbewegung zwischen dem erstarrten Gussmaterial und der die Formkavität 4 begrenzenden Endfläche 7 des Formungselements 6 bzw. des Einsatzstücks 18 behindert die Drehung des Drehelements 1 nicht, da sie sich auf einen schmalen, der Breite der ringförmigen Öffnung 5 entsprechenden Bereich beschränkt und nur ein geringes Reibungsmoment erzeugt wird.

Im Winkelabstand von vorzugsweise mehr als 180° zu der Angussstelle wird die sich drehende Formkavität 4 zwecks Entformung des gebildeten Endlosstrangs 10 geöffnet, indem aufeinander folgend die sich segmentweise gegenüberliegenden Formglieder 14 und 15 gemäß den Pfeilen 16 und 17 auseinandergezogen werden. Der im Querschnitt U-förmige Endlosstrang 10 lässt sich dann in radialer Richtung von dem Profilring 13 lösen und z.B. tangential, wie in Fig. 1 gezeigt, aus der Formkavität 4 herausführen. Anschließend werden die Formglieder 14 und 15 wieder zusammengeführt, so dass, spätestens im Winkelbereich der Vorlaufstrecke der Ausgangsquerschnitt der Formkavität 4 wieder hergestellt ist.

Es versteht sich, dass je nach dem herzustellenden Strang Formglieder in zu dem gezeigten Ausführungsbeispiel unterschiedlicher Weise und in unterschiedlicher Anzahl gebildet werden könnten.

Wenn sich die benötigte Materialmenge in Stranglängsrichtung, z.B. infolge periodisch wiederkehrender Durchbrüche oder/und Einschnitte, ändert, lässt sich die Gussmaterialzufuhr durch die Spritzgießeinrichtung 25 entsprechend steuern.

Abweichend von dem gezeigten Ausführungsbeispiel könnte die in durchgehende Ringöffnung 5 auch unterbrochen sein.

Die durch die durchgehende Ringöffnung gebildete durchgehende Materialader könnte an anderer als der gezeigten Stelle, z.B. am freien Ende eines der U-Schenkel, angeordnet sein.

Auf einem einzigen Drehelement können mehrere, z.B. zur Drehachse des Drehelements konzentrische Formkavitäten zur gleichzeitigen Erzeugung mehrerer Endlosstränge vorgesehen sein.

In einer weiteren Ausführungsform sind im Winkelabstand zu der Einrichtung für die Einbringung von Gussmaterial in die Formkavität eine weitere Einrichtung zur Einbringung eines weiteren, von dem Gussmaterial verschiedenen Gussmaterials in Ausnehmungen im erzeugten Endlosstrang sowie Einrichtungen zur Erweiterung der Formkavität unter Freilegung der Ausnehmungen vorgesehen. Als weiteres Gussmaterial kommt z.B. ein thermoplastisches Elastomer in Betracht.

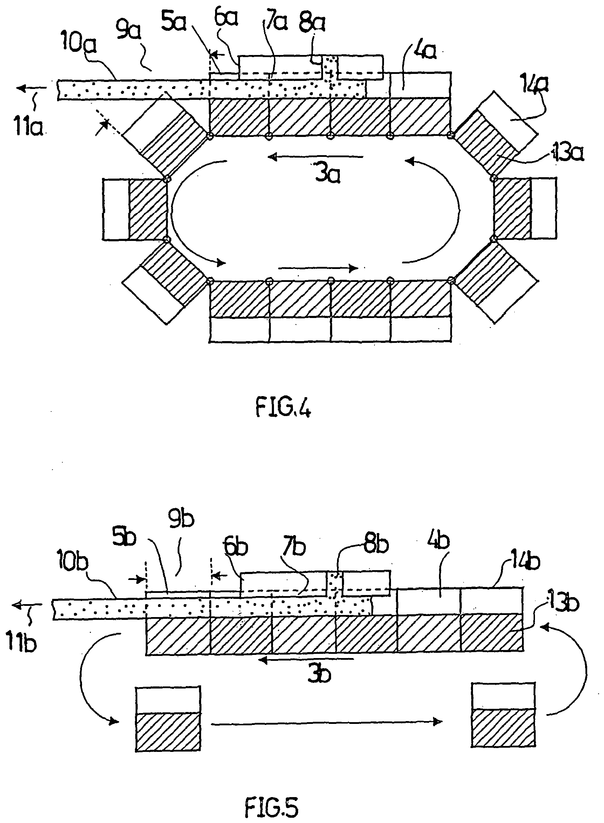

Im folgenden werden anhand der Fig. 4 und 5 weitere Ausführungsbeispiele und Vorrichtungen zur Erzeugung von Endlossträngen beschrieben, wobei gleich oder gleichwirkende Teile mit derselben Bezugszahl wie in den vorangehenden Figuren bezeichnet sind, wobei den betreffenden Bezugszahlen der Buchstab a bzw. b beigefügt ist.

Gemäß Fig. 4 bilden zu einer geschlossenen Kette verbundene, jeweils Abschnitte 13a und 14a umfassende Formglieder zusammen mit entsprechenden, diesen gegenüberliegenden Gliedern (nicht gezeigt) eine lineare Formkavität 4a. Zur Bildung einer Entformungsöffnung 9a können mit der Kette mitgeführte oder stationäre Bewegungseinrichtungen zur Auseinanderbewegung der Formglieder vorgesehen sein, welche die Formglieder spätestens am entgegengesetzten Ende der Formkavität 4a zur Neubildung der Formkavität 4a wieder zusammenführen. Zwei einander nur im Bereich der Formkavität gegenüberliegende Ketten könnten auch in einer einzigen Ebene liegen.

Das Ausführungsbeispiel von Fig. 5 unterscheidet sich von dem vorangehenden Ausführungsbeispiel dadurch, dass Abschnitte 13b und 14b umfassende Formglieder nicht zu einer Kette verbunden, sondern unabhängig voneinander durch geeignete Bewegungseinrichtung von einer Entformungsöffnung 9b an das der Entformungsöffnung 9b entgegengesetzte Ende einer Formkavität 4b zur fortlaufenden Neubildung der gemäß Pfeil 3b bewegten Formkavität zurückgeführt werden können. Bei beiden Ausführungsbeispielen ist ein sich über die gesamte Länge der Formkavität erstreckende Einlassöffnung 5a gebildet, die schmal mit Vergleich zum Umfang des Querschnitts der Formkavitäten 4a bzw. 4b ist.

Bei den vorangehend beschriebenen Verfahren lassen sich auch Varianten des Spritzgießverfahrens ähnliche Varianten, wie z.B. das Einlegen von Dekorfolien, das Einlegen von endlosen oder vereinzelten Einlegeteilen aus anderen Werkstoffen u. dgl. verwirklichen, so dass Endlosstränge aus Kunststoff mit besonderen Merkmalen gefertigt werden können.

Mit Hilfe der vorangehend beschriebenen Verfahren lassen sich z.B. Verstärkungseinlagen aus Kunststoff für Dichtungsstränge herstellen.

## Patentansprüche

1. Verfahren zur Herstellung von Endlossträngen, insbesondere in Längsrichtung strukturierter Stränge aus Kunststoff, wobei zur Bildung einer ringförmigen Formkavität (4) die Formkavität begrenzende Formglieder (14,15) zusammengeführt und aneinandergereiht werden, wobei die Formkavität (4) in Reihenlängsrichtung bewegt wird und an einer entgegen der Bewegungsrichtung fortlaufenden Angussstelle Gussmaterial durch eine seitliche Einlassöffnung (5) der Formkavität (4) in die Formkavität (4) eingebracht wird, wobei die Formkavität (4) im Abstand zu der Angussstelle unter Auseinanderführung der Formglieder (14,15) fortlaufend geöffnet wird, um einen in der Formkavität (4) verfestigten Endlosstrang (10) zu entformen, **dadurch gekennzeichnet, dass** in die Einlassöffnung ein Steg eines Formungselements (6) eingreift, in dessen der Formkavität zugewandten Endfläche (7) ein Heißkanal (8) für die Zuführung von Gussmaterial ausmündet, wobei das Formungselement die umlaufende Einlassöffnung über einen bestimmten Umfangsbereich verschließt und ergänzt mit der Endfläche in diesem Bereich die Formkavität, so dass sie im Querschnitt rundum geschlossen ist, wobei ein um eine Drehachse (2) drehendes Element (1) eine zentrale Scheibe (12) mit einem peripheren Profilring (13) aufweist, wobei der periphere Profilring zusammen mit beweglichen Formgliedern die Formkavität bildet, die der Bildung des Endlosstrangs mit U-förmigem Querschnitt dient, wobei während der Profilring geschlossen um eine periphere Randfläche der zentralen Scheibe umläuft, zur Bildung der ringförmigen Formkavität mehrere Formglieder segmentweise aneinander gereiht sind.

2. Verfahren nach Anspruch 1,
**dadurch gekennzeichnet,**
**dass** an einer entgegen der Drehung fortlaufenden Angussstelle Gussmaterial in die Formkavität eingebracht wird und dass die Formkavität (4) im Winkelabstand zu der Angussstelle entgegen der Drehung fortlaufend partiell geöffnet wird, um den in der Formkavität (4) verfestigten Endlosstrang (10) zu entformen.

3. Verfahren nach Anspruch 1 oder 2,
**dadurch gekennzeichnet,**
**dass** der Formkavität (4) in den die Angussstelle einschließenden Umfangsbereich fortlaufend Wärme entzogen oder/und zugeführt wird.

4. Verfahren nach Anspruch 3,
**dadurch gekennzeichnet,**
**dass** der Formkavität (4) in dem sich in Drehrichtung von der Angussstelle erstreckenden Umfangsbereich Wärme entzogen und in dem sich entgegen der Drehrichtung von der Angussstelle erstreckenden Umfangsbereich Wärme zugeführt wird.

5. Verfahren nach Anspruch 3 oder 4,
**dadurch gekennzeichnet,**
**dass** der Wärmeentzug und/oder die Wärmezuführung über das die Einlassöffnung (5) fortlaufend verschließende Formungselement (6) erfolgt.

6. Verfahren nach einem der Ansprüche 1 bis 5,
**dadurch gekennzeichnet,**
**dass** die Bewegung der Formkavität (4) die Zufuhr von Gussmaterial, die Gussmaterialtemperatur, die Wärmeab- und -zuführung sowie die fortlaufende Öffnung der Formkavität (4) so aufeinander abgestimmt werden, dass sich, bezogen auf die Gesamtvorrichtung, ein ortsfester Erstarrungsbereich und/oder eine feste Position der Entformungsöffnung (9) ergibt.

7. Verfahren nach einem der Ansprüche 1 bis 6,
**dadurch gekennzeichnet,**
**dass** die Formglieder (14,15) zur Bildung einer Entformungsöffnung (9) fortlaufend axial auseinandergezogen werden.

8. Verfahren nach einem der Ansprüche 1 bis 7,
**dadurch gekennzeichnet,**
**dass** Einrichtungen zur Bewegung der Formglieder (14,15) mit dem Drehelement (1) mitgedreht werden.

9. Verfahren nach einem der Ansprüche 1 bis 8,
**dadurch gekennzeichnet,**
**dass** das Gussmaterial unter Druck in die Formkavität (4) eingebracht wird.

10. Vorrichtung zur Herstellung von Endlossträngen (10), insbesondere in Längsrichtung strukturierter Stränge aus Kunststoff,
mit einer zusammengeführten und aneinander gereihten Formglieder (14,15) umfassenden ringförmigen Formkavität (4), die in Reihenlängsrichtung bewegbar ist, eine Einrichtung (21,22,25) zur Einbringung von Gussmaterial in die Formkavität (4) durch eine seitliche Einlassöffnung (5) an einer entgegen der Bewegungsrichtung fortlaufenden Angussstelle und Einrichtungen zur fortlaufenden Öffnung der Formkavität (4) im Abstand zu der Angussstelle, um einen in der Formkavität (4) verfestigten Endlosstrang (10) zu entformen, **dadurch gekennzeichnet, dass** in die Einlassöffnung ein Steg eines Formungselements (6) eingreift, in dessen der Formkavität zugewandten Endfläche (7) ein Heißkanal (8) für die Zuführung von Gussmaterial ausmündet, wobei das Formungselement die umlaufende Einlassöffnung über einen bestimmten Umfangsbereich verschließt und ergänzt mit der Endfläche in diesem Bereich die Formkavität, so dass sie im Querschnitt rundum geschlossen ist, wobei ein um eine Drehachse (2) drehbares Element (1) eine zentrale Scheibe (12) mit einem peripheren Profilring (13) aufweist, wobei der periphere Profilring zusammen mit beweglichen Formgliedern die Formkavität bildet, die der Bildung des Endlosstrangs mit U-förmigem Querschnitt dient, wobei während der Profilring geschlossen um eine periphere Randfläche der zentralen Scheibe umläuft, zur Bildung der ringförmigen Formkavität mehrere Formglieder segmentweise aneinander reihbar sind.

11. Vorrichtung nach Anspruch 10,
**gekennzeichnet durch** eine Einrichtung (21,22,25) zur Einbringung von Gussmaterial in die Formkavität an einer entgegen der Drehung fortlaufenden Angussstelle und Einrichtungen zur fortlaufenden partiellen Öffnung der Formkavität (4) im Winkelabstand zu der Angussstelle, um den in der Formkavität (4) verfestigten Endlosstrang (10) zu entformen.

12. Vorrichtung nach Anspruch 11,
**dadurch gekennzeichnet,**
**dass** Einrichtungen (23,24) zur Ab- und/oder Zuführung von Wärme von bzw. zu der Formkavität (4) in dem die Angussstelle einschließenden Umfangsbereich vorgesehen sind.

13. Vorrichtung nach Anspruch 12,
**dadurch gekennzeichnet,**
**dass** die Einrichtungen (24) zur Wärmezuführung in dem sich entgegen der Drehrichtung von der Angussstelle erstreckenden Umfangsbereich vorgesehen sind.

14. Vorrichtung nach einem der Ansprüche 10 bis 13,
**dadurch gekennzeichnet,**
**dass** die Einrichtungen zur partiellen Öffnung der Formkavität (4) Einrichtungen zur axialen Bewegung der Formglieder (14,15) umfassen.

15. Vorrichtung nach Anspruch 14,
**dadurch gekennzeichnet,**
**dass** die Bewegungseinrichtungen mit dem Drehelement (1) mit drehbar sind.

16. Vorrichtung nach einem der Ansprüche 10 bis 15,
**dadurch gekennzeichnet,**
**dass** die Einrichtungen (21,22,25) zur Einbringung von Gussmaterial eine Spritzgusseinrichtung (25) umfassen.

## Claims

1. Method for producing endless strands, in particular strands of plastic that are structured in the longitudinal direction, wherein, to form an annular mould cavity (4), mould members (14, 15) that delimit the mould cavity are brought together and arranged in a row with one another, wherein the mould cavity (4) is moved in the longitudinal direction of the row and, at a gate that extends counter to the movement direction, casting material is introduced into the mould cavity (4) through a lateral inlet opening (5) in the mould cavity (4), wherein the mould cavity (4) is continuously opened at a distance from the gate by moving the mould members (14, 15) apart, in order to demould an endless strand (10) that has solidified in the mould cavity (4), **characterized in that** a web of a shaping element (6) engages in the inlet opening, a heating channel (8) for supplying casting material opening out in the end face (7), facing towards the mould cavity, of said web, wherein the shaping element closes the encircling inlet opening over a certain circumferential region and, with the end face, supplements the mould cavity in this region, with the result that said mould cavity is closed all around in cross section, wherein an element (1) that rotates about an axis of rotation (2) has a central disc (12) with a peripheral profile ring (13), wherein the peripheral profile ring together with movable mould members forms the mould cavity, which serves to form the endless strand with a U-shaped cross section, wherein, while the profile ring encircles a peripheral boundary face of the central disc in a closed manner, to form the annular mould cavity a plurality of mould members are segmentally arranged in a row with one another.

2. Method according to Claim 1,
**characterized in that**
casting material is introduced into the mould cavity at a gate that extends counter to the rotation, and **in that** the mould cavity (4) is continuously partially opened at an angular distance from the gate counter to the rotation, in order to demould the endless strand (10) that has solidified in the mould cavity (4).

3. Method according to Claim 1 or 2,
**characterized in that**
heat is continuously extracted from or/and supplied to the mould cavity (4) in the circumferential region that encloses the gate.

4. Method according to Claim 3,
**characterized in that**
heat is extracted from the mould cavity (4) in the circumferential region extending from the gate in the direction of rotation, and heat is supplied to said mould cavity in the circumferential region extending from the gate counter to the direction of rotation.

5. Method according to Claim 3 or 4,
**characterized in that**
the heat is extracted and/or supplied via the shaping element (6) that continuously closes the inlet opening (5).

6. Method according to one of Claims 1 to 5,
**characterized in that**
the movement of the mould cavity (4), the feed of casting material, the casting material temperature, the heat dissipation and supply and the continuous opening of the mould cavity (4) are coordinated with one another such that, with reference to the overall apparatus, there is a stationary solidification region and/or a fixed position of the demoulding opening (9).

7. Method according to one of Claims 1 to 6,
**characterized in that**
the mould members (14, 15) are continuously axially drawn apart to form a demoulding opening (9).

8. Method according to one of Claims 1 to 7,
**characterized in that**
devices for moving the mould members (14, 15) are corotated with the rotary element (1).

9. Method according to one of Claims 1 to 8,
**characterized in that**
the casting material is introduced into the mould cavity (4) under pressure.

10. Apparatus for producing endless strands (10), in particular strands of plastic that are structured in the longitudinal direction, having an annular mould cavity (4) that comprises mould members (14, 15) brought together and arranged in a row with one another and that can be moved in the longitudinal direction of the row, a device (21, 22, 25) for introducing casting material into the mould cavity (4) through a lateral inlet opening (5) at a gate that extends counter to the movement direction, and devices for continuously opening the mould cavity (4) at a distance from the gate, in order to demould an endless strand (10) that has solidified in the mould cavity (4), **characterized in that** a web of a shaping element (6) engages in the inlet opening, a heating channel (8) for supplying casting material opening out in the end face (7), facing towards the mould cavity, of said web, wherein the shaping element closes the encircling inlet opening over a certain circumferential region and, with the end face, supplements the mould cavity in this region, with the result that said mould cavity is closed all around in cross section, wherein an element (1) that can rotate about an axis of rotation (2) has a central disc (12) with a peripheral profile ring (13), wherein the peripheral profile ring together with movable mould members forms the mould cavity, which serves to form the endless strand with a U-shaped cross section, wherein, while the profile ring encircles a peripheral boundary face of the central disc in a closed manner, to form the annular mould cavity a plurality of mould members can be segmentally arranged in a row with one another.

11. Apparatus according to Claim 10,
**characterized by** a device (21, 22, 25) for introducing casting material into the mould cavity at a gate that extends counter to the rotation, and devices for continuously partially opening the mould cavity (4) at an angular distance from the gate, in order to demould the endless strand (10) that has solidified in the mould cavity (4).

12. Apparatus according to Claim 11,
**characterized in that**
devices (23, 24) for dissipating and/or supplying heat respectively from and to the mould cavity (4) are provided in the circumferential region that encloses the gate.

13. Apparatus according to Claim 12,
**characterized in that**
the devices (24) for supplying heat are provided in the circumferential region extending from the gate counter to the direction of rotation.

14. Apparatus according to one of Claims 10 to 13,
**characterized in that**
the devices for partially opening the mould cavity (4) comprise devices for axially moving the mould members (14, 15).

15. Apparatus according to Claim 14,
**characterized in that**
the movement devices can be corotated with the rotary element (1).

16. Apparatus according to one of Claims 10 to 15,
**characterized in that**
the devices (21, 22, 25) for introducing casting material comprise an injection moulding device (25).

## Revendications

1. Procédé pour la fabrication de brins continus, en particulier de brins en matière synthétique, structurés dans la direction longitudinale, où, pour la formation d'une cavité de moulage annulaire (4), des éléments de moulage (14, 15) délimitant la cavité de moulage sont réunis et alignés, la cavité de moulage (4) étant déplacée dans la direction longitudinale de l'alignement et de la matière à couler étant introduite en un site de coulée progressant contre le sens de déplacement à travers une ouverture d'entrée latérale (5) de la cavité de moulage (4) dans la cavité de moulage (4), la cavité de moulage (4) étant ouverte en continu à une certaine distance par rapport au site de coulée avec écartement des éléments de moulage (14, 15) pour démouler un brin continu (10) solidifié dans la cavité de moulage (4), **caractérisé en ce qu'**une âme d'un élément de façonnage (6) pénétrant dans l'ouverture d'entrée, dans la surface d'extrémité (7) orientée vers la cavité de moulage de laquelle débouche un canal chauffant (8) pour l'alimentation en matière à couler, l'élément de façonnage fermant l'ouverture d'entrée périphérique sur une certain zone périphérique et complétant, avec la surface d'extrémité, dans cette zone, la cavité de moulage de telle sorte que ladite cavité est fermée en périphérie dans sa section transversale, un élément (1) tournant autour d'un axe de rotation (2) présentant un disque central (12) pourvu d'un anneau profilé périphérique (13), l'anneau profilé périphérique formant, conjointement avec des éléments de moulage mobiles, la cavité de moulage qui sert à la formation du brin continu pourvu d'une section transversale en forme de U, plusieurs éléments de moulage étant alignés selon des segments pour former la cavité de moulage annulaire pendant que l'anneau profilé tourne de manière fermée autour d'une surface de bord périphérique du disque central.

2. Procédé selon la revendication 1, **caractérisé en ce que** de la matière à couler est introduite dans la cavité de moulage au niveau d'un site de coulée progressant contre le sens de rotation et **en ce que** la cavité de moulage (4) est ouverte partiellement en continu contre le sens de rotation à une certaine distance angulaire par rapport au site de coulée pour démouler le brin continu (10) solidifié dans la cavité de moulage (4).

3. Procédé selon la revendication 1 ou 2, **caractérisé en ce que** de la chaleur est soutirée en continu de la cavité de moulage (4) et/ou fournie en continu à celle-ci dans la zone périphérique comprenant le site de coulée.

4. Procédé selon la revendication 3, **caractérisé en ce que** de la chaleur est soutirée de la cavité de moulage (4) dans la zone périphérique s'étendant dans le sens de rotation du site de coulée et de la chaleur est fournie à ladite cavité dans la zone périphérique s'étendant contre le sens de rotation du site de coulée.

5. Procédé selon la revendication 3 ou 4, **caractérisé en ce que** le soutirage de chaleur et/ou la fourniture de chaleur a lieu par l'intermédiaire de l'élément de façonnage (6) fermant en continu l'ouverture d'entrée (5).

6. Procédé selon l'une quelconque des revendications 1 à 5, **caractérisé en ce que** le déplacement de la cavité de moulage (4), l'alimentation en matière à couler, la température de la matière à couler, le soutirage et la fourniture de chaleur ainsi que l'ouverture continue de la cavité de moulage (4) sont adaptés les uns aux autres de manière telle qu'on obtient, par rapport au dispositif global, une zone de solidification stationnaire et/ou une position fixe de l'ouverture de démoulage (9).

7. Procédé selon l'une quelconque des revendications 1 à 6, **caractérisé en ce que** les éléments de moulage (14, 15) sont écartés axialement en continu les uns des autres pour former une ouverture de démoulage (9).

8. Procédé selon l'une quelconque des revendications 1 à 7, **caractérisé en ce que** des dispositifs pour le déplacement des éléments de moulage (14, 15) tournent conjointement avec l'élément rotatif (1).

9. Procédé selon l'une quelconque des revendications 1 à 8, **caractérisé en ce que** la matière à couler est introduite sous pression dans la cavité de moulage (4).

10. Dispositif pour la fabrication de brins continus (10), en particulier de brins en matière synthétique, structurés dans la direction longitudinale, présentant une cavité de moulage annulaire (4) comprenant des éléments de moulage (14, 15) réunis et alignés et pouvant être déplacée dans la direction longitudinale de l'alignement, un dispositif (21, 22, 25) pour l'introduction de matière à couler dans la cavité de moulage (4) à travers une ouverture d'entrée latérale (5) en un site de coulée progressant contre le sens de déplacement et des dispositifs pour l'ouverture continue de la cavité de moulage (4) à une certaine distance par rapport au site de coulée, pour démouler un brin continu (10) solidifié dans la cavité de moulage (4), **caractérisé en ce qu'**une âme d'un élément de façonnage (6) pénètre dans l'ouverture d'entrée, dans la surface d'extrémité (7) orientée vers la cavité de moulage de laquelle débouche un canal chauffant (8) pour l'alimentation en matière à couler, l'élément de façonnage fermant l'ouverture d'entrée périphérique sur une certain zone périphérique et complétant, avec la surface d'extrémité, dans cette zone, la cavité de moulage de telle sorte que ladite cavité est fermée en périphérie dans sa section transversale, un élément (1) rotatif autour d'un axe de rotation (2) présentant un disque central (12) pourvu d'un anneau profilé périphérique (13), l'anneau profilé périphérique formant, conjointement avec des éléments de moulage mobiles, la cavité de moulage qui sert à la formation du brin continu pourvu d'une section transversale en forme de U, plusieurs éléments de moulage pouvant être alignés selon des segments pour former la cavité de moulage annulaire pendant que l'anneau profilé tourne de manière fermée autour d'une surface de bord périphérique du disque central.

11. Dispositif selon la revendication 10, **caractérisé par** un dispositif (21, 22, 25) pour l'introduction de matière à couler dans la cavité de moulage en un site de coulée progressant contre le sens de rotation et des dispositifs pour l'ouverture partielle continue de la cavité de moulage (4) à une certaine distance angulaire par rapport au site de coulée, pour démouler le brin continu (10) solidifié dans la cavité de moulage (4).

12. Dispositif selon la revendication 11, **caractérisé en ce que** des dispositifs (23,24) pour le soutirage de chaleur et/ou l'alimentation en chaleur de la cavité de moulage (4) sont prévus dans la zone périphérique comprenant le site de coulée.

13. Dispositif selon la revendication 12, **caractérisé en ce que** des dispositifs (24) pour l'alimentation en chaleur sont prévus dans la zone périphérique s'étendant contre le sens de rotation du site de coulée.

14. Dispositif selon l'une quelconque des revendications 10 à 13, **caractérisé en ce que** des dispositifs pour l'ouverture partielle de la cavité de moulage (4) comprennent des dispositifs pour le déplacement axial des éléments de moulage (14, 15).

15. Dispositif selon la revendication 14, **caractérisé en ce que** les dispositifs de déplacement peuvent tourner avec l'élément rotatif (1).

16. Dispositif selon l'une quelconque des revendications 10 à 15, **caractérisé en ce que** les dispositifs (21, 22, 25) pour l'introduction de matière à couler comprennent un dispositif de moulage par injection (25).
